# EUROPÄISCHE PATENTSCHRIFT

(11) **EP 3 693 934 B1**
(45) Veröffentlichungstag und Bekanntmachung des Hinweises auf die Patenterteilung: **03.04.2024**
(21) Anmeldenummer: 20166416.6
(22) Anmeldetag: 06.02.2014
(51) Int. Cl.: G06V 10/141, G06V 10/143, G06V 10/147, G07D 7/12, G03B 15/06, G03H 1/22, G07D 7/00

(54) **BILDAUFNAHMESYSTEM ZUR BILDAUFNAHME EINES MERKMALS EINES IDENTIFIKATIONSDOKUMENTES**
IMAGING SYSTEM FOR CAPTURING A FEATURE OF AN IDENTIFICATION DOCUMENT
SYSTÈME D'ENREGISTREMENT LES IMAGES D'UNE CARACTÉRISTIQUE D'UN DOCUMENT D'IDENTIFICATION

(30) Priorität: 09.04.2013 DE 102013103522
(43) Veröffentlichungstag der Anmeldung: 12.08.2020
(62) Teilanmeldung aus: 14703810.3
(73) Patentinhaber: Bundesdruckerei GmbH, 10969 Berlin (DE)
(72) Erfinder: RABELER, Uwe, 30453 Hannover (DE); WOLF, Andreas, 13158 Berlin (DE); THATER, Marcel, 30952 Ronnenberg (DE); WALDEN, Matthias, 30926 Seelze (DE); SCHÜRING, Andreas, 30827 Garbsen (DE)
(74) Vertreter: Patentship Patentanwaltsgesellschaft mbH

(56) Entgegenhaltungen:
- EP-A1- 2 323 368
- WO-A1-2011/028620
- DE-A1-102007 052 952
- US-A1- 2005 007 776
- US-A1- 2009 092 290
- US-A1- 2010 246 902
- MORGAN MCGUIRE ET AL: "Optical Splitting Trees for High-Precision Monocular Imaging", IEEE COMPUTER GRAPHICS AND APPLICATIONS, IEEE SERVICE CENTER, NEW YORK, NY, US, Bd. 27, Nr. 2, 1. März 2007 (2007-03-01), Seiten 32-42, XP011172490, ISSN: 0272-1716

## Beschreibung

Die vorliegende Erfindung betrifft das Gebiet der optischen Bildsensorik.

Die Druckschrift US 2010/246902 A1 zeigt ein multispektrales System mit Bildgebern und Beleuchtungsquellen.

Die Druckschrift WO 2011/028620 A1 zeigt ein System zur biometrischen Bildaufnahme.

Die Druckschrift US 2009/092290 A1 zeigt einen Fingerabdruck-Sensor mit einer Lichtquelle, einer Platte und einem bildgebenden System.

Die Druckschrift DE 10 2007 052 952 A1 zeigt eine Vorrichtung zur Verifizierung eines Hologramms.

Die Druckschrift US 2005/007776 A1 zeigt ein Lesesystem zur Erfassung eines Dokumentes.

Die Druckschrift EP 2 323 368 A1 zeigt eine Lesevorrichtung umfassend eine transparente Glasplatte zum Auflegen eines Reisepasses.

Die Druckschrift "MORGAN MCGUIRE ET AL.: "Optical Splitting Trees for High-Precision Monocular Imaging", IEEE COMPUTER GRAPHICS AND APPLICATIONS, IEEE SERVICE CENTER, NEW YORK, NY, US, Bd. 27, Nr. 2, 1. März 2007 (2007-03-01), Seiten 32-42, XP011172490, ISSN: 0272-1716" zeigt allgemein das Konzept oder die Funktionsweise eines Strahlteilers.

Für die Prüfung von Identifikationsdokumenten werden üblicherweise Referenzmerkmale bzw. Referenzdaten dieser Identifikationsdokumente erfasst. Typischerweise liegen die Referenzmerkmale bzw. Referenzdaten nur selten und zu nicht planbaren Zeitpunkten zu deren Erfassung vor. Aus Kosten- und Praktikabilitätsgründen sollen zudem einmal erfasste Referenzmerkmale bzw. Referenzdaten auch für zukünftige, zum Zeitpunkt der Erfassung noch nicht vorhandene Prüfungsgeräte verwenden werden können.

Üblicherweise werden die Referenzmerkmale bzw. Referenzdaten in reproduzierbarer Qualität bezüglich Farbraum, Abbildungsmaßstab und Verzerrung durch Bildaufnahmen erfasst. Die Bildaufnahmen geschehen mittels herkömmlicher Bildaufnahmesysteme, beispielsweise mittels sogenannter Reprotische. Diese Bildaufnahmesysteme weisen variable Einstellungsmöglichkeiten für die Beleuchtungskörper und deren Position auf und beinhalten eine hochauflösende Kamera. Die Beleuchtungskörper müssen je nach Aufnahmeart entsprechend manuell eingestellt werden. Um mit diesenBildaufnahmesystemen Referenzmerkmale bzw. Referenzdaten vollständig zu erfassen, werden in der Regel mehrere Stunden bis Tage benötigt. Bei wiederholter Erfassung der Referenzmerkmale bzw. Referenzdaten sind diese bezüglich Position und Beleuchtung zudem nicht oder nur aufwändig reproduzierbar.

Die manuelle Bildaufnahme mittels Bildaufnahmesystemen ist folglich zeitintensiv, weil jede Bildaufnahme individuell erstellt werden muss. Zudem ist die Reproduzierbarkeit der Bildaufnahmen meist nicht gewährleistet. Außerdem erfolgen zumeist keine Kalibrierung und kein Farbmanagement. Bildaufnahmen im Ultraviolett (UV) B und C sowie im Infrarot (IR) Wellenlängenbereich werden zudem durch herkömmliche Bildaufnahmesysteme nicht unterstützt. Darüber hinaus ist mittels bekannter Bildaufnahmesysteme lediglich eine Erfassung von wenigen Referenzmerkmalen bzw. Referenzdaten pro Tag möglich.

Es ist daher die Aufgabe der vorliegenden Erfindung, ein effizienteres Konzept für die Aufnahme von Merkmalen eines Identifikationsdokumentes, insbesondere für die Aufnahme von Referenzmerkmalen, zu schaffen.

Die obige Aufgabe wird durch die Merkmale der unabhängigen Ansprüche gelöst. Vorteilhafte Weiterbildungsformen der Erfindung sind Gegenstand der Beschreibung, der beiliegenden Figuren und der abhängigen Ansprüche.

Die vorliegende Erfindung basiert auf der Erkenntnis, dass die obige Aufgabe durch ein Bildaufnahmesystem realisiert werden kann, mit dem das auf einer Dokumentenauflage angeordnete Identifikationsdokument aus unterschiedlichen Beleuchtungswinkeln beleuchtet werden kann. Auf diese Weise können Beleuchtungswinkel abhängige Bildaufnahmen des Identifikationsdokumentes mit dem Merkmal in einem Arbeitsgang erzeugt werden. Dies ist insbesondere bei Merkmalen vorteilhaft, welche Beleuchtungswinkel abhängige Darstellungen aufweisen und beispielsweise changierend oder durch Hologramme gebildet sind.

Gemäß einem Aspekt betrifft die Erfindung ein Bildaufnahmesystem zur Bildaufnahme eines Merkmals eines Identifikationsdokumentes mit Beleuchtungswinkel abhängigen Darstellungen, mit einer Dokumentenauflage für das Identifikationsdokument, einer Beleuchtungseinrichtung zum Beleuchten der Dokumentenauflage aus unterschiedlichen Beleuchtungswinkeln, und einer Bildaufnahmekamera für die Beleuchtungswinkel abhängige Bildaufnahme des Merkmals.

Die Beleuchtungseinrichtung ist beispielsweise ausgebildet, die beispielsweise transparente Dokumentenauflage aus den unterschiedlichen Beleuchtungswinkeln von unten anzustrahlen, sodass das auf der Dokumentenauflage aufliegende Identifikationsdokument Beleuchtungswinkel abhängig beleuchtet werden kann.

Das Merkmal kann ein Hologramm sein oder changierende Eigenschaften aufweisen, so dass je nach Beleuchtungswinkel bzw. Lichteinfallswinkel unterschiedliche Darstellungen des Merkmals beispielsweise durch Reflektion entstehen.

Das Merkmal des Identifikationsdokumentes kann darüber hinaus ein optisches Sicherheitsmerkmal sein, welches bei Bestrahlung mit Licht, beispielsweise Infrarotlicht, Ultraviolettlicht oder weißem, sichtbarem Licht, sichtbar wird und das Licht in dem jeweiligen Wellenlängenbereich reflektieren, re-emittieren, emittieren oder zur Emission von Licht in dem jeweiligen Wellenlängenbereich, beispielsweise durch Fluoreszenz, angeregt werden kann.

Durch das Bildaufnahmesystem wird ermöglicht, unterschiedliche Beleuchtungswinkel abhängige Darstellungen des Merkmals bei fest vorangestellten Aufnahmeparametern, beispielsweise Fokallänge, Kontrast, Helligkeit oder Schärfe, rasch und in einem Arbeitsgang optisch beispielsweise als Referenzmerkmale für die spätere Echtheitsüberprüfung aufzunehmen.

Das Bildaufnahmesystem kann beispielsweise als Referenzbildaufnahmesystem für die Referenzbildaufnahme von Referenzmerkmalen, beispielsweise von Sicherheitsmerkmalen eines Identifikationsdokumentes, eingesetzt werden.

Die Bildaufnahmekameras können jeweils elektronische Bildsensoren, beispielsweise CCD-Bildsensoren, für die Bildaufnahmen umfassen.

Die Bildaufnahmen können, gemäß einer Ausführungsform, reproduzierbar sein, also bei beliebiger Wiederholung zu gleichen Ergebnissen führen, auch wenn ein anderes Prüfungsgerät bzw. Verifikationsgerät gleicher Bauart verwendet wird. Zudem können die Bildaufnahmen gemäß einer Ausführungsform kalibriert sein, das heißt, Farbmanagement, Entzerrung, Helligkeitskorrektur und Weißabgleich können auf definierte und reproduzierbare Weise durchgeführt werden. Des Weiteren kann die Aufnahmezeit gemäß einer Ausführungsform kurz sein und je nach zu erfassendem Datenumfang 5-10 Minuten nicht überschreiten. Darüber hinaus können gemäß einer Ausführungsform bei einem Aufnahmevorgang bzw. einer Aufnahmesitzung alle Referenzmerkmale bzw. Referenzdaten, beispielsweise optische Sicherheitsmerkmale eines Identifikationsdokumentes, erfasst werden, auch dann, wenn diese dem Aufnehmenden nicht bekannt sind.

Gemäß einer Ausführungsform ermöglicht das Bildaufnahmesystem einen automatischen Workflow bzw. Arbeitsablauf für kurze Erfassungszeiten bzw. Bildaufnahmezeiten. Die Erfassung bzw. Bildaufnahme von Referenzmerkmalen bzw. Referenzdaten kann also, gemäß einer Ausführungsform, automatisiert erfolgen.

Gemäß einer Ausführungsform können Vorlagen bzw. Templates für die Erfassung bzw. die Bildaufnahme bereitgestellt werden. Gemäß einer Ausführungsform können also Vorlagen bzw. Templates für die Bildaufnahmekamera bzw. Kamera sowie die Beleuchtung verwendet werden. Das Bildaufnahmesystem kann somit, gemäß einer Ausführungsform, ein kalibriertes Aufnahmesystem bzw. Bildaufnahmesystem mit standardisierten Beleuchtungs- und Aufnahmeprofilen bzw. Bildaufnahmeprofilen umfassen.

Somit können also kalibrierte Aufnahmen bzw. Bildaufnahmen mit Weißabgleich, Helligkeits- und Verzerrungskorrektur aufgenommen werden. Gemäß einer Ausführungsform kann ein durchgängiges Farbmanagement, beispielsweise im RGB-Farbraum, angewendet werden. Durch das Bildaufnahmesystem kann, gemäß einer Ausführungsform, eine vollständige Erfassung bzw. Bildaufnahme von bis zu einhundert Referenzmerkmalen bzw. Referenzdaten täglich durchgeführt werden.

Gemäß einer Ausführungsform kann eine zentrale Datenbank mit Web bzw. Internet basiertem Deep-Zoom Zugriff eingesetzt werden. Somit kann, gemäß einer Ausführungsform, eine Deep-Zoom Betrachtung der Aufnahmen bzw. Bildaufnahmen durchgeführt werden. Durch die Deep-Zoom Betrachtung kann eine elektronische Lupe mit 2500 DPI für hochauflösende Detailaufnahmen bewerkstelligt werden.

Das Bildaufnahmesystem bzw. Referenzbildaufnahmesystem kann, gemäß einer Ausführungsform, in einem portablen, schlagfesten und staubdichten Gehäuse untergebracht sein. Das Bildaufnahmesystem kann zudem, gemäß einer Ausführungsform, über einen abnehmbaren Gehäusedeckel zur Anpassung der Arbeitshöhe verfügen. Zudem kann das Bildaufnahmesystem, gemäß einer Ausführungsform, über einen abnehmbaren Trolley für einen einfachen Transport verfügen. Ein Lampen- und Röhrentausch kann, gemäß einer Ausführungsform, durch eine ausfahrbare optische Einheit durchgeführt werden.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Gemäß einer Ausführungsform ist die Beleuchtungseinrichtung ausgebildet, die Dokumentenauflage aus unterschiedlichen Beleuchtungswinkeln sequenziell zu beleuchten. Dadurch können mehrere Beleuchtungswinkel abhängige Bildaufnahmen des Merkmals in einem Arbeitsgang erstellt werden.

Gemäß der Erfindung umfasst die Beleuchtungseinrichtung eine Mehrzahl von Lichtelementanordnungen mit jeweils zumindest einem oder mehreren Lichtelementen, wobei die Lichtelementanordnungen ausgebildet sind, Licht aus unterschiedlichen Beleuchtungswinkeln, insbesondere jeweils aus einem Beleuchtungswinkel von 10°, 30°, 50° oder 70°, in Richtung der Dokumentenauflage auszusenden. Das Lichtelement umfasst Gruppen von LEDs oder Lampen, welche jeweils in derselben Ebene angeordnet sind. Die Gruppen von LEDs oder Lampen sind jeweils in derselben Ebene, in einer Leiste, angeordnet, wobei die Oberflächennormalen der Leisten unter unterschiedlichen Beleuchtungswinkeln, beispielsweise den vorgenannten, in Richtung der Dokumentenauflage weisen.

Gemäß der Erfindung umfasst die Beleuchtungseinrichtung eine Lichtelementanordnung mit zumindest einem Lichtelement, wobei die Lichtelementanordnung mittels eines Stellgliedes schwenkbar angeordnet ist, um Licht aus unterschiedlichen Beleuchtungswinkeln, insbesondere jeweils aus einem Beleuchtungswinkel von 10°, 30°, 50° oder 70°, in Richtung der Dokumentenauflage auszusenden. Das Lichtelement weist mehrere in derselben Ebene angeordnete LEDs oder Lampen auf.

Gemäß einer Ausführungsform ist die Lichtelementanordnung zum Erzeugen von Licht in einem ersten Wellenlängenbereich ausgebildet, wobei die Beleuchtungseinrichtung eine zweite Lichtelementanordnung zum Erzeugen von Licht in einem zweiten Wellenlängenbereich umfasst. Auf diese Weise können unterschiedliche Merkmale des Identifikationsdokumentes bei Beleuchtung mit Licht unterschiedlicher Wellenlängen effizient aufgenommen werden.

Gemäß einer Ausführungsform sind der erste Wellenlängenbereich und der zweite Wellenlängenbereich zumindest teilweise unterschiedlich. Der erste Wellenlängenbereich und der zweite Wellenlängenbereich können aus den folgenden Wellenlängenbereichen ausgewählt sein: Infrarot-Wellenlängenbereich, Ultraviolett-Wellenlängenbereich, Weißlicht-Wellenlängenbereich, Halogen-Wellenlängenbereich.

Gemäß einer Ausführungsform umfasst das Bildaufnahmesystem eine zweite Bildaufnahmekamera. Durch die zweite Bildaufnahmekamera können beispielsweise Bildaufnahmen in einem Wellenlängenbereich aufgenommen werden, in dem die Bildaufnahmekamera nicht oder nur unzureichend aufnahmefähig ist. Die Bildaufnahmekamera und/oder die zweite Bildaufnahmekamera können ortsfest in dem Bildaufnahmesystem angeordnet sein.

Gemäß einer Ausführungsform sind die Bildaufnahmekamera und die zweite Bildaufnahmekamera für Bildaufnahmen bei unterschiedlichen Beleuchtungswinkeln oder in unterschiedlichen Wellenlängenbereichen vorgesehen. Somit können mit der ersten Bildaufnahmekamera Bildaufnahmen in einem ersten Wellenlängenbereich und mit der zweiten Bildaufnahmekamera Bildaufnahmen ein einem zweiten Wellenlängenbereich bewirkt werden. Auf diese Weise können mit demselben System unterschiedliche Merkmale mit Wellenlängen abhängigen Eigenschaften, beispielsweise Reflektionen oder Remissionen, sichtbar gemacht und aufgenommen werden.

Gemäß einer Ausführungsform sind die Bildaufnahmekamera und die zweite Bildaufnahmekamera winklig zueinander, insbesondere unter einem Winkel von 90° innerhalb eines Winkeltoleranzbereichs, beispielsweise 1°, 2°, 5° oder 10°, ausgerichtet. Dadurch wird erreicht, dass die Bildaufnahmekameras in unterschiedliche optische Richtungen weisen, was eine Trennung von für die jeweilige Bildaufnahmekamera bestimmten Lichtanteilen, beispielsweise mittels eines semitransparenten Spiegels, vereinfacht.

Gemäß einer Ausführungsform ist unterhalb der Dokumentenauflage ein optisches Element angeordnet, welches vorgesehen ist, einen ersten Anteil des einfallenden Lichts zu der Bildaufnahmekamera zu richten, und einen zweiten Anteil des einfallenden Lichts zu der zweiten Bildaufnahmekamera zu richten.

Das optische Element kann zwischen der Bildaufnahmekamera und der Dokumentenauflage angeordnet sein, wobei die zweite Bildaufnahmekamera zwischen dem optischen Element und der Dokumentenauflage oder seitlich von dem optischen Element angeordnet sein kann.

Das optische Element kann ferner ausgebildet sein, einfallendes Licht im ersten Wellenlängenbereich in Richtung der Bildaufnahmekamera durchzulassen, und einfallendes Licht im zweiten Wellenlängenbereich in Richtung der zweiten Bildaufnahmekamera zu reflektieren.

Das optische Element kann ferner einen Raum unterhalb der Dokumentenauflage diagonal in einen ersten Teilraum und in einen zweiten Teilraum teilen, wobei die Bildaufnahmekamera in dem ersten Teilraum angeordnet ist, und wobei die zweite Bildaufnahmekamera in dem zweiten Teilraum angeordnet ist.

Gemäß einer Ausführungsform umfasst die Bildaufnahmekamera ein erstes optisches Filter zur Dämpfung von Licht in dem zweiten Wellenlängenbereich, und die zweite Bildaufnahmekamera ein zweites optisches Filter zur Dämpfung von Licht in dem ersten Wellenlängenbereich.

Durch die vorgenannten Maßnahmen wird erreicht, dass die jeweilige Bildaufnahmekamera durch Störlicht in dem jeweils anderen Wellenlängenbereich weniger gestört wird.

Gemäß einer Ausführungsform ist das Bildaufnahmesystem ausgebildet, eine Mehrzahl von Bildaufnahmen bei unterschiedlichen Beleuchtungswinkeln oder in unterschiedlichen Wellenlängenbereichen automatisch in einem Arbeitsgang zu erzeugen. Auf diese Weise wird eine effiziente Bildaufnahme mehrerer Beleuchtungswinkel abhängiger oder Wellenlängenbereich abhängiger Darstellungen eines Merkmals und/oder eines Identifikationsdokumentes ermöglicht.

Gemäß einer Ausführungsform ist das Bildaufnahmesystem ein Referenzbildaufnahmesystem für die Referenzbildaufnahme von Referenzmerkmalen. Die Referenzbilder und/oder die Referenzmerkmale können beispielsweise in einer Datenbank zum späteren Abgleich bzw. zur späteren Verifikation eines Identifikationsdokumentes eingesetzt werden.

Gemäß einer Ausführungsform ist die Dokumentenauflage lichttransparent und für die Aufnahme des Identifikationsdokumentes vorgesehen, wobei die Bildaufnahmekamera ausgebildet ist, das von dem Identifikationsdokument ansprechend auf eine Beleuchtung bei unterschiedlichen Beleuchtungswinkeln stammende Licht in einer Bildaufnahmeserie aufzunehmen. Somit wird eine effiziente Bildaufnahme in Form einer Bildaufnahmeserie mehrerer Beleuchtungswinkel abhängiger Darstellungen eines Merkmals und/oder eines Identifikationsdokumentes ermöglicht.

Gemäß einer Ausführungsform umfasst das Bildaufnahmesystem ferner einen Prozessor, welcher ausgebildet ist, die Beleuchtungseinrichtung für die Beleuchtungswinkel abhängige oder für die Wellenlängenbereich abhängige Beleuchtung der Dokumentenauflage zu steuern. Der Prozessor kann für die Ausführung eines Steuerprogrammes zur automatisierten Bildaufnahme in einem Arbeitsgang ausgelegt sein. Zudem kann der Prozessor für die automatisierte Ansteuerung einzelner Lichtelemente und/oder Lichtelementanordnungen sowie die automatisierte Auslösung der Bildaufnahmen und/oder Bildaufnahmeserien vorgesehen sein.

Gemäß einem weiteren Aspekt betrifft die Erfindung ein Verfahren zur Beleuchtungswinkel abhängigen Bildaufnahme eines Merkmals eines Identifikationsdokumentes mit Beleuchtungswinkel abhängigen Darstellungen, wobei das Identifikationsdokument auf eine Dokumentenauflage auflegbar ist, mit Beleuchten der Dokumentenauflage aus unterschiedlichen Beleuchtungswinkeln, und Erzeugen einer Mehrzahl von Beleuchtungswinkel abhängigen Bildaufnahmen des Merkmals.

Das Verfahren kann beispielsweise mit dem Bildaufnahmesystem realisiert werden. Weitere Merkmale des Verfahrens ergeben sich unmittelbar aus den funktionalen Merkmalen des Bildaufnahmesystems.

Weitere Ausführungsformen der Erfindung werden Bezug nehmend auf die beiliegenden Zeichnungen erläutert. Es zeigen:
- Fig. 1: eine Schnittansicht eines Bildaufnahmesystems gemäß einer Ausführungsform;
- Fig. 2: eine Schnittansicht eines Bildaufnahmesystems gemäß einer Ausführungsform;
- Fig. 3: eine Gesamtansicht eines Bildaufnahmesystems gemäß einer Ausführungsform;
- Fig. 4: eine Gesamtansicht eines Bildaufnahmesystems gemäß einer Ausführungsform;
- Fig. 5: eine Aufsicht eines Bildaufnahmesystems gemäß einer Ausführungsform;
- Fig. 6: eine Untersicht eines Bildaufnahmesystems gemäß einer Ausführungsform;
- Fig. 7: eine Innenansicht eines Bildaufnahmesystems gemäß einer Ausführungsform;
- Fig. 8: eine Innenansicht eines Bildaufnahmesystems gemäß einer Ausführungsform;
- Fig. 9: eine Schnittansicht eines Bildaufnahmesystems gemäß einer Ausführungsform;
- Fig. 10: ein Ablaufdiagramm eines Verfahrens zur Beleuchtungswinkel abhängigen Bildaufnahme eines Merkmals eines Identifikationsdokumentes mit Beleuchtungswinkel abhängigen Darstellungen; und
- Fig. 11: ein Ablaufdiagramm eines Verfahrens zur automatisierten Erfassung von Dokumenten.

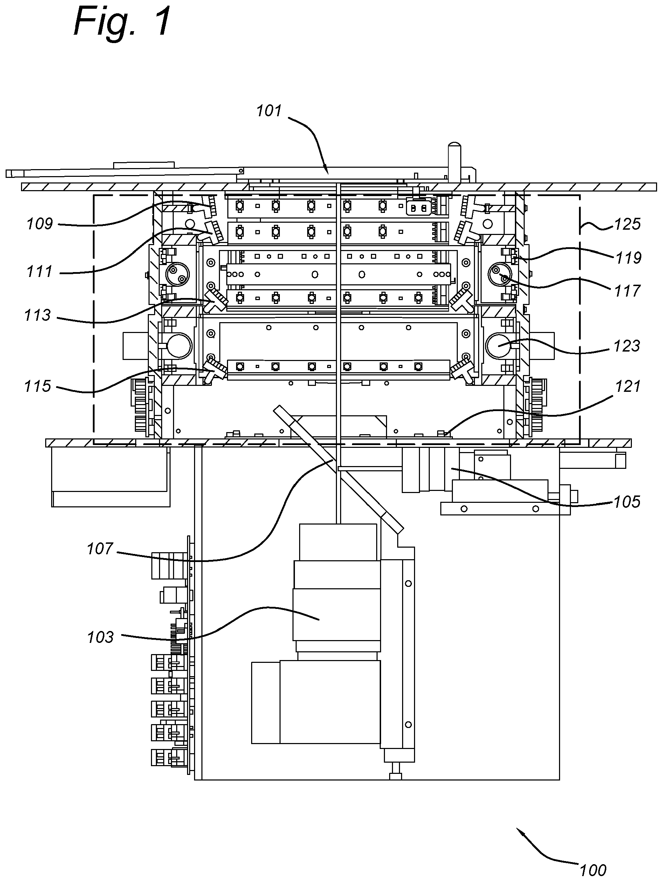

Fig. 1 zeigt eine Schnittansicht eines Bildaufnahmesystems 100 gemäß einer Ausführungsform. Das Bildaufnahmesystem 100 umfasst eine Dokumentenauflage 101 sowie eine Bildaufnahmekamera 103 und optional eine zweite Bildaufnahmekamera 105. Zudem ist ein optisches Element 107 dargestellt. Zudem umfasst das Bildaufnahmesystem 100 eine Mehrzahl von Lichtelementanordnungen 109, 111, 113, 115, 117, 119, 121, 123, insbesondere eine erste Lichtelementanordnung 109, eine zweite Lichtelementanordnung 111, eine dritte Lichtelementanordnung 113, eine vierte Lichtelementanordnung 115, eine fünfte Lichtelementanordnung 117, eine sechste Lichtelementanordnung 119, eine siebente Lichtelementanordnung 121 sowie eine achte Lichtelementanordnung 123. Die Lichtelementanordnungen 109, 111, 113, 115, 117, 119, 121 und 123 bilden in diesem Ausführungsbeispiel eine Beleuchtungseinrichtung 125 zum Beleuchten der Dokumentenauflage 101 aus unterschiedlichen Beleuchtungswinkeln.

Die Dokumentenauflage 101 kann beispielsweise lichttransparent und für die Aufnahme des Identifikationsdokumentes vorgesehen sein. Gemäß einer Ausführungsform kann somit eine reproduzierbare Aufnahme und Positionierung des Identifikationsdokumentes sichergestellt werden.

Die Bildaufnahmekamera 103 kann elektronische Bildsensoren, beispielsweise CCD-Bildsensoren, für die Bildaufnahmen umfassen. Die Bildaufnahmekamera 103 kann zudem ausgebildet sein, Licht in einem ersten Wellenlängenbereich zu erfassen. Die Bildaufnahmekamera 103 ist somit für die Beleuchtungswinkel abhängige Bildaufnahme eines Merkmals eines Identifikationsdokumentes vorgesehen. Gemäß einer Ausführungsform ist die Bildaufnahmekamera 103 eine Kamera für Weißlicht oder eine Kamera für das sichtbare Lichtspektrum.

Die zweite Bildaufnahmekamera 105 kann ebenfalls elektronische Bildsensoren, beispielsweise CCD-Bildsensoren, für die Bildaufnahmen umfassen. Die zweite Bildaufnahmekamera 105 kann zudem ausgebildet sein, Licht in einem zweiten Wellenlängenbereich zu erfassen. Die zweite Bildaufnahmekamera 105 ist somit ebenfalls für die Beleuchtungswinkel abhängige Bildaufnahme eines Merkmals eines Identifikationsdokumentes vorgesehen. Gemäß einer Ausführungsform ist die zweite Bildaufnahmekamera 105 eine Kamera für Infrarotlicht bzw. eine Infrarot-Kamera.

Das optische Element 107 ist vorgesehen, einen ersten Anteil des einfallenden Lichts zu der Bildaufnahmekamera 103 zu richten, und einen zweiten Anteil des einfallenden Lichts zu der zweiten Bildaufnahmekamera 105 zu richten. Gemäß einer Ausführungsform ist das optische Element 107 ausgebildet, einfallendes Licht im ersten Wellenlängenbereich in Richtung der Bildaufnahmekamera 103 durchzulassen, und einfallendes Licht im zweiten Wellenlängenbereich in Richtung der zweiten Bildaufnahmekamera 105 zu reflektieren. Somit können Bildaufnahmen aus unterschiedlichen Wellenlängenbereichen von der Bildaufnahmekamera 103 und der zweiten Bildaufnahmekamera 105 aufgenommen werden. Gemäß einer Ausführungsform ist das optische Element 107 ein halbdurchlässiger Spiegel bzw. ein semitransparenter Spiegel.

Die erste Lichtelementanordnung 109 dient beispielsweise der Beleuchtung der Dokumentenauflage 101 unter einem vorbestimmten Beleuchtungswinkel. Gemäß einer Ausführungsform emittiert die erste Lichtelementanordnung 109 Licht aus einem ersten Wellenlängenbereich. Gemäß einer Ausführungsform ist die erste Lichtelementanordnung 109 ein Streiflicht-Modul unter einem Beleuchtungswinkel von 10°.

Die zweite Lichtelementanordnung 111 dient beispielsweise der Beleuchtung der Dokumentenauflage 101 unter einem vorbestimmten Beleuchtungswinkel. Gemäß einer Ausführungsform emittiert die zweite Lichtelementanordnung 111 Licht aus einem ersten Wellenlängenbereich. Gemäß einer Ausführungsform ist die zweite Lichtelementanordnung 111 ein Raumwinkellicht-Modul unter einem Beleuchtungswinkel von 30°.

Die dritte Lichtelementanordnung 113 dient beispielsweise der Beleuchtung der Dokumentenauflage 101 unter einem vorbestimmten Beleuchtungswinkel. Gemäß einer Ausführungsform emittiert die dritte Lichtelementanordnung 113 Licht aus einem ersten Wellenlängenbereich. Gemäß einer Ausführungsform ist die dritte Lichtelementanordnung 113 ein Raumwinkellicht-Modul unter einem Beleuchtungswinkel von 50°.

Die vierte Lichtelementanordnung 115 dient beispielsweise der Beleuchtung der Dokumentenauflage 101 unter einem vorbestimmten Beleuchtungswinkel. Gemäß einer Ausführungsform emittiert die vierte Lichtelementanordnung 115 Licht aus einem ersten Wellenlängenbereich. Gemäß einer Ausführungsform ist die vierte Lichtelementanordnung 115 ein Raumwinkellicht-Modul unter einem Beleuchtungswinkel von 70°.

Die fünfte Lichtelementanordnung 117 dient beispielsweise der Beleuchtung der Dokumentenauflage 101 unter einem vorbestimmten Beleuchtungswinkel. Gemäß einer Ausführungsform emittiert die fünfte Lichtelementanordnung 117 Licht aus einem ersten Wellenlängenbereich. Gemäß einer Ausführungsform ist die fünfte Lichtelementanordnung 117 eine Halogenlampe bzw. eine Halogenbeleuchtung.

Die sechste Lichtelementanordnung 119 dient beispielsweise der Beleuchtung der Dokumentenauflage 101 unter einem vorbestimmten Beleuchtungswinkel. Gemäß einer Ausführungsform emittiert die sechste Lichtelementanordnung 119 Licht aus einem zweiten Wellenlängenbereich. Gemäß einer Ausführungsform ist die sechste Lichtelementanordnung 119 eine Infrarot-LED bzw. ein Infrarotlicht-Modul.

Die siebente Lichtelementanordnung 121 dient beispielsweise der Beleuchtung der Dokumentenauflage 101 unter einem vorbestimmten Beleuchtungswinkel. Gemäß einer Ausführungsform emittiert die siebente Lichtelementanordnung 121 Licht aus einem ersten Wellenlängenbereich. Gemäß einer Ausführungsform ist die siebente Lichtelementanordnung 121 eine Ultraviolett (UV) A LED bzw. eine Ultraviolett (UV) A Röhre.

Die achte Lichtelementanordnung 123 dient beispielsweise der Beleuchtung der Dokumentenauflage 101 unter einem vorbestimmten Beleuchtungswinkel. Gemäß einer Ausführungsform emittiert die achte Lichtelementanordnung 123 Licht aus einem ersten Wellenlängenbereich. Gemäß einer Ausführungsform ist die achte Lichtelementanordnung 123 eine Ultraviolett (UV) B LED bzw. eine Ultraviolett (UV) B Röhre und/oder eine Ultraviolett (UV) C LED bzw. eine Ultraviolett (UV) C Röhre.

Die Lichtelementanordnungen 109, 111, 113, 115, 117, 119, 121 und 123 bilden gemäß einer Ausführungsform eine Beleuchtungseinrichtung 125 zum Beleuchten der Dokumentenauflage 101 aus unterschiedlichen Beleuchtungswinkeln.

Gemäß der Erfindung ist zumindest eine der vorgenannten Lichtelementanordnungen 109, 111, 113, 115, 117, 119, 121 und/oder 123 schwenkbar angeordnet .

Dadurch kann eine Einstellung der unterschiedlichen Beleuchtungswinkel bewirkt werden. Insbesondere können hierdurch Beleuchtungswinkel von 10°, 30°, 50° und/oder 70° in Richtung der Dokumentenauflage 101 eingestellt werden.

Gemäß der Erfindung ist eine der vorgenannten Lichtelementanordnungen 109, 111, 113, 115, 117, 119, 121 und/oder 123 mittels eines Stellglieds schwenkbar angeordnet .

Dadurch wird der Vorteil erreicht, dass mehrere Beleuchtungswinkel mit nur einer Lichtelementanordnung eingestellt werden können. Hierbei kann das Bildaufnahmesystem 100 nur eine der Lichtelementanordnungen 109, 111, 113, 115, 117, 119, 121 und/oder 123 umfassen, welche schwenkbar, beispielsweise mittels des Stellglieds, angeordnet bzw. gelagert sein kann.

Durch das Bildaufnahmesystem 100 kann somit die Erfassung von Referenzmerkmalen bzw. Referenzdaten automatisiert werden. Gemäß einer Ausführungsform liefert das Bildaufnahmesystem 100 kalibrierte, helligkeits- und geometriekorrigierte Bildaufnahmen in einem definierten Farbraum. Gemäß einer Ausführungsform kann die Erfassungszeit von Referenzmerkmalen bzw. Referenzdaten zwanzig- bis einhundert-mal so schnell sein wie bei bisheriger manueller Erfassung mit einem herkömmlichen Bildaufnahmesystem, beispielsweise mittels eines Reprotisches. Gemäß einer Ausführungsform können Lichtelementanordnungen entsprechend aller gängigen Beleuchtungsarten integriert sein. Außerdem können, gemäß einer Ausführungsform, Lichtelementanordnungen entsprechend weiterer Beleuchtungsarten nachgerüstet werden. Gemäß einer Ausführungsform kann die Optik verzerrungsfrei arbeiten. Gemäß einer Ausführungsform können durch den Einsatz zweier Bildaufnahmekameras die Bildaufnahmen sowohl im Infrarot-Wellenlängenbereich als auch im Weißlicht-Wellenlängenbereich scharf sein, ohne dass es einer Fokusveränderung bedarf.

Das Bildaufnahmesystem 100 kann somit, gemäß einer Ausführungsform, eine teilautomatisierte, kalibrierte und reproduzierbare Erfassung von beispielsweise bis zu einhundert Identifikationsdokumenten mit Referenzmerkmalen bzw. Referenzdaten täglich ermöglichen. Somit kann gemäß einer Ausführungsform erstmals eine Trennung von Referenzmerkmalerfassung bzw. Referenzdatenerfassung und Prüfsystementwicklung erreicht werden. Dadurch kann, gemäß einer Ausführungsform, die erreichbare Qualität eines Prüfsystems erhöht werden. Außerdem können, gemäß einer Ausführungsform, durch die nur einmalige Erfassung für verschiedene Prüfsysteme Kosten eingespart werden. Durch die Verwendung normierter Daten kann, gemäß einer Ausführungsform, erstmals eine automatisierte Ableitung von gerätespezifischen Prüfinstruktionen für zu prüfende Musteridentifikationsdokumente mit Referenzmerkmalen bzw. Referenzdaten aus generisch beschriebenen Referenzinformationen ermöglicht werden.

Das Bildaufnahmesystem 100 kann somit, gemäß einer Ausführungsform, die Bildaufnahme eines Merkmals eines Identifikationsdokumentes mit Beleuchtungswinkel abhängigen Darstellungen in einem Arbeitsgang ohne Austausch einzelner Komponenten ermöglichen.

Das Bildaufnahmesystem 100 kann, gemäß einer Ausführungsform, durch mehrere technische Daten charakterisiert sein. Die optische Auflösung im Weißlicht (WL) kann, gemäß einer Ausführungsform, 1018 DPI betragen. Die optische Auflösung im Infrarot (IR) kann, gemäß einer Ausführungsform, 850 DPI betragen. Das Bildaufnahmesystem 100 kann, gemäß einer Ausführungsform, Auflicht im Ultraviolett (UV) A, B und C Wellenlängenbereich, im Infrarot (IR) Wellenlängenbereich bei 850nm und 890nm, im Halogen Wellenlängenbereich sowie im Weißlicht Wellenlängenbereich einsetzen. Gemäß einer Ausführungsform kann das Bildaufnahmesystem 100 beispielsweise Streiflicht bzw. eine Weißlicht LED unter einem Beleuchtungswinkel von größer als 10° aus mehr als 8 Richtungen einsetzen. Gemäß einer Ausführungsform kann das Bildaufnahmesystem 100 beispielsweise Raumwinkellicht bzw. eine Weißlicht LED unter Beleuchtungswinkeln von größer als 10°, 30°, 50° und 70° aus mehr als jeweils 4 Richtungen einsetzen. Gemäß einer Ausführungsform kann das Bildaufnahmesystem 100 über einen Durchlicht-Aufsatz mit bzw. für Weißlicht LEDs und/oder Ultraviolett (UV) A LEDs verfügen.

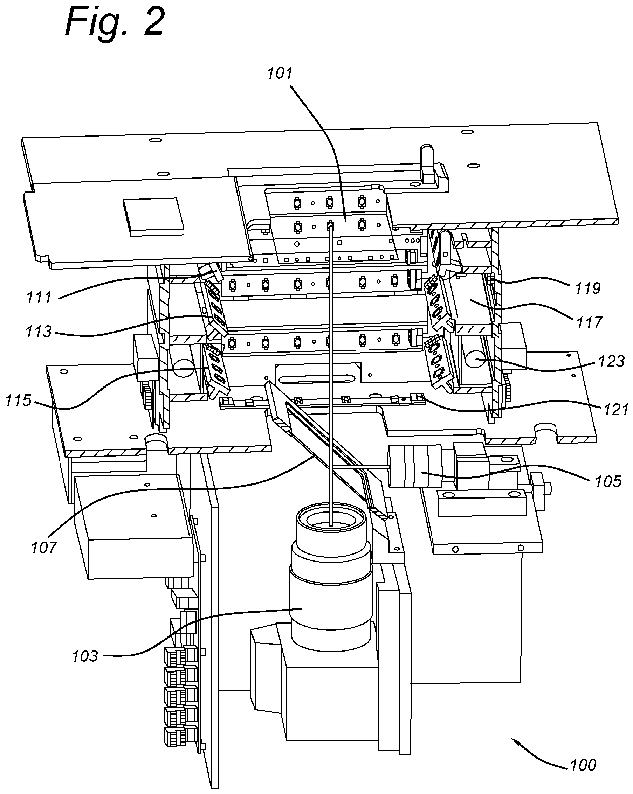

Fig. 2 zeigt eine Schnittansicht eines Bildaufnahmesystems 100 gemäß einer Ausführungsform. Das Bildaufnahmesystem 100 ist hierbei geschwenkt dargestellt.

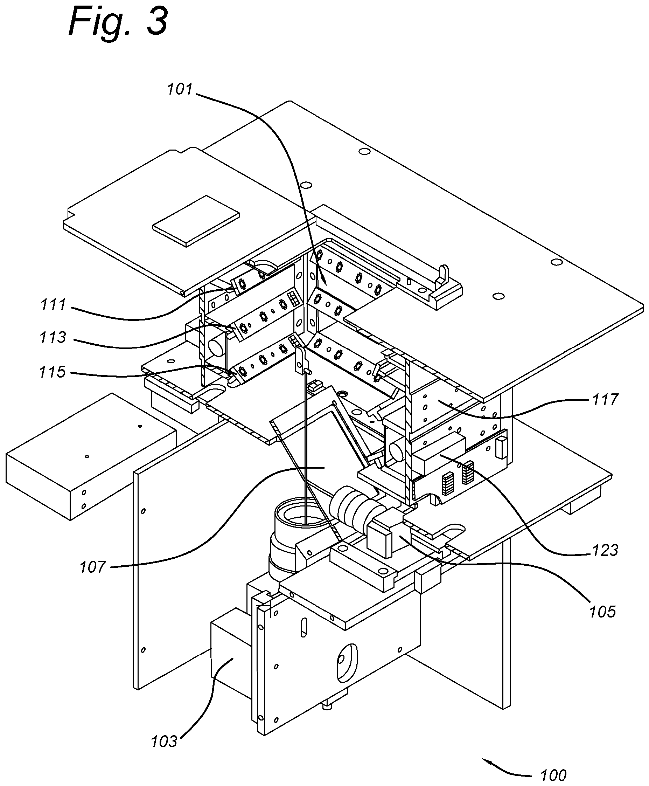

Fig. 3 zeigt eine Gesamtansicht eines Bildaufnahmesystems 100 gemäß einer Ausführungsform. Das Bildaufnahmesystem 100 ist hierbei im Schnitt dargestellt.

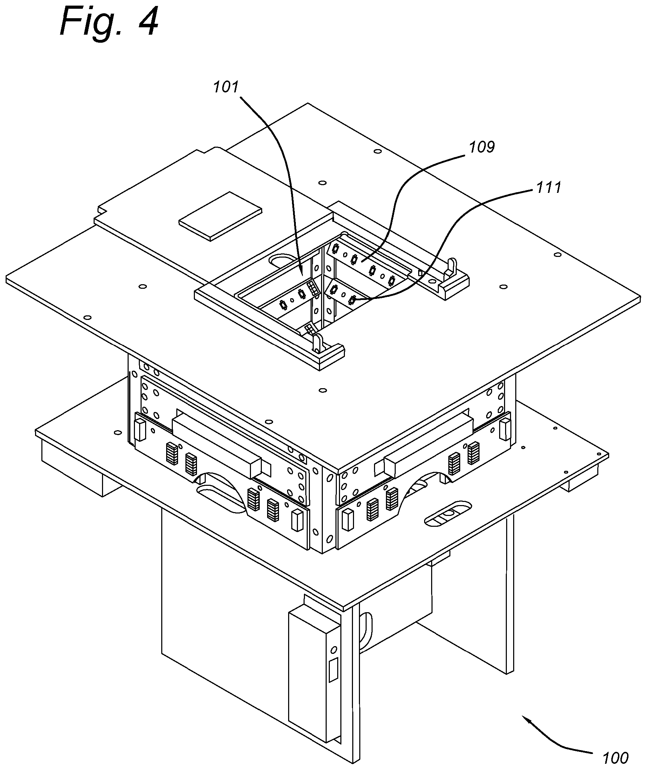

Fig. 4 zeigt eine Gesamtansicht eines Bildaufnahmesystems 100 gemäß einer Ausführungsform. Das Bildaufnahmesystem 100 ist hierbei in geschlossener Form dargestellt.

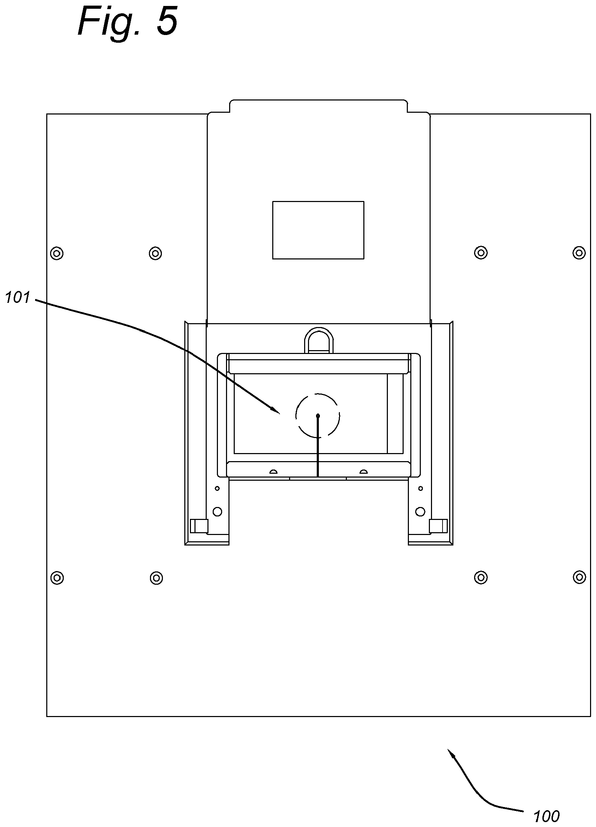

Fig. 5 zeigt eine Aufsicht eines Bildaufnahmesystems 100 gemäß einer Ausführungsform. Die Aufsicht bzw. Draufsicht stellt hierbei eine Ansicht von oben dar.

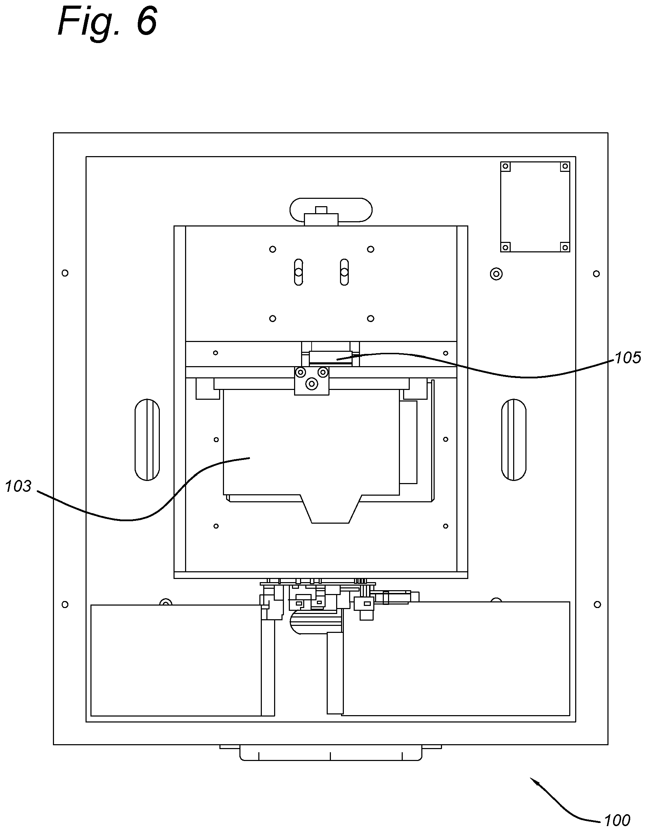

Fig. 6 zeigt eine Untersicht eines Bildaufnahmesystems 100 gemäß einer Ausführungsform. Die Untersicht stellt hierbei eine Ansicht von unten dar.

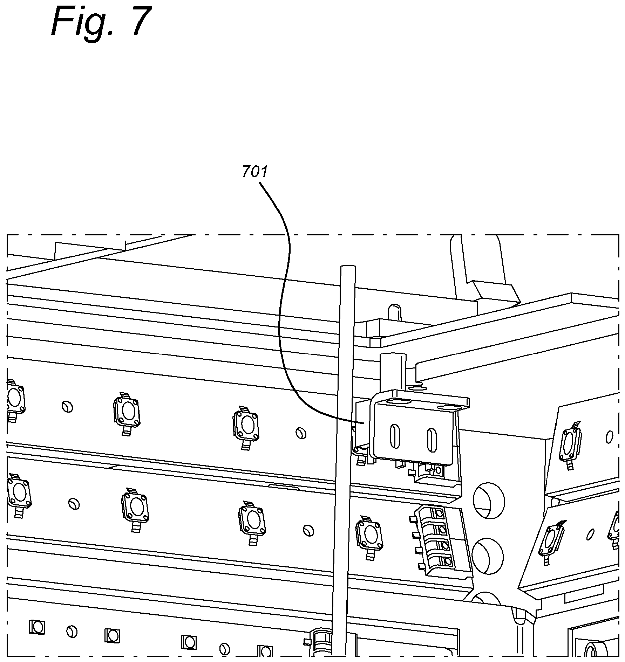

Fig. 7 zeigt eine Innenansicht eines Bildaufnahmesystems 100 gemäß einer Ausführungsform. Zusätzlich ist hierbei ein Mikroschalter 701 zur Überwachung der Deckelstellung vorgesehen.

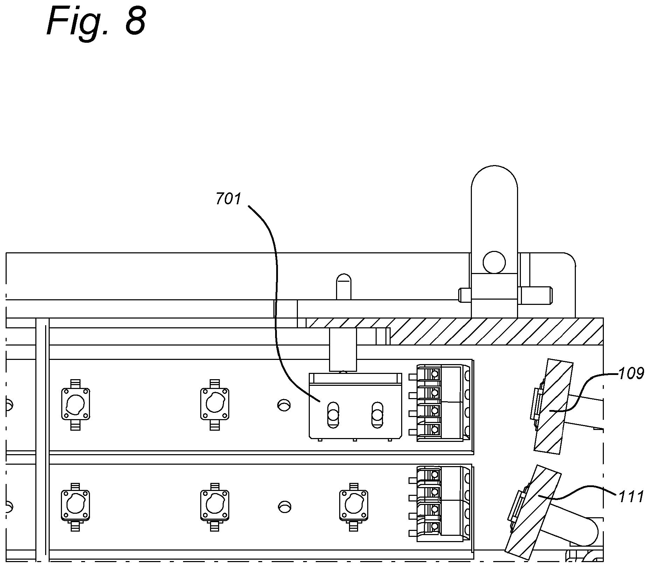

Fig. 8 zeigt eine Innenansicht eines Bildaufnahmesystems 100 gemäß einer Ausführungsform. Hierbei sind eine erste Lichtelementanordnung 109 und eine zweite Lichtelementanordnung 111 vorgesehen. Zusätzlich ist ein Mikroschalter 701 zur Überwachung der Deckelstellung vorgesehen. Um Schattenwurf zu vermeiden, ist der Mikroschalter 701 außerhalb des Arbeitsbereiches angeordnet.

Der in Fig. 7 und Fig. 8 dargestellte Mikroschalter 701 kann beispielsweise einen automatisierten Arbeitsgang einleiten, bei dem eine Mehrzahl von Bildaufnahmen und/oder Bildaufnahmeserien bei unterschiedlichen Beleuchtungswinkeln und/oder in unterschiedlichen Wellenlängenbereichen automatisch erzeugt werden. Der Mikroschalter 701 kann zudem beispielsweise das Verfahren 1000 zur Beleuchtungswinkel abhängigen Bildaufnahme eines Merkmals eines Identifikationsdokumentes mit Beleuchtungswinkel abhängigen Darstellungen einleiten. Der Mikroschalter 701 kann darüber hinaus beispielsweise den Beginn einer automatisierten Durchführung einer Bildaufnahme und/oder Bildaufnahmeserie anzeigen bzw. signalisieren. Alternativ kann der Mikroschalter 701 beispielsweise eine Abschaltung des Bildaufnahmesystems 100 herbeiführen.

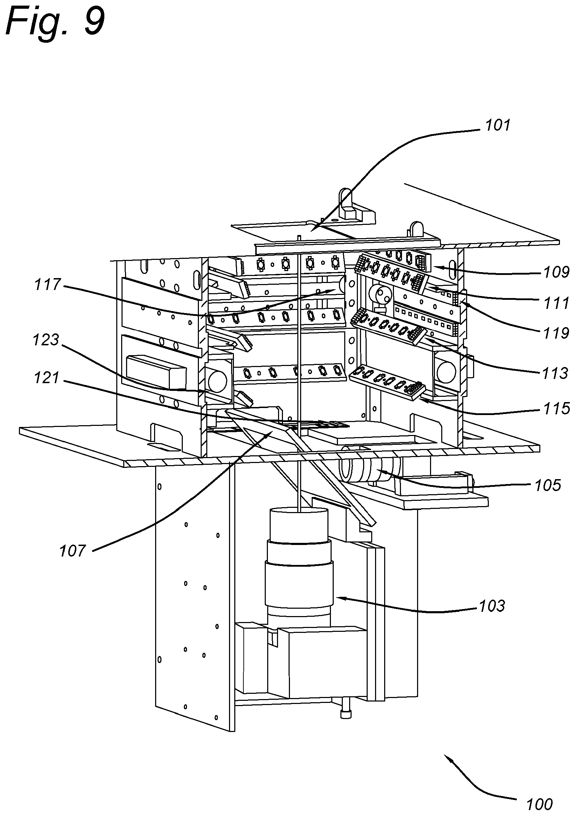

Fig. 9 zeigt eine Schnittansicht eines Bildaufnahmesystems 100 gemäß einer Ausführungsform. Das Bildaufnahmesystem 100 ist hierbei geschwenkt dargestellt.

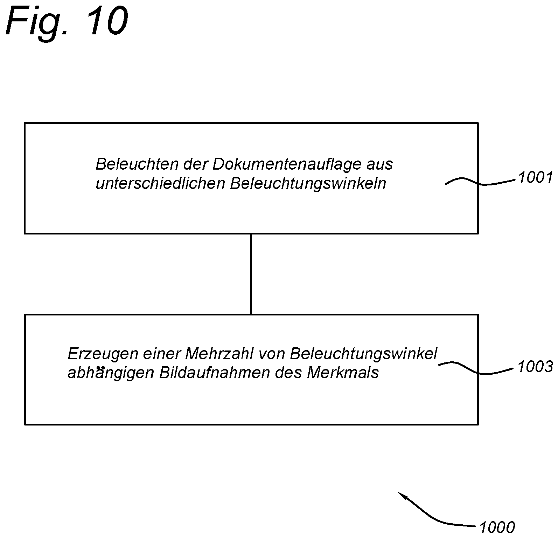

Fig. 10 zeigt ein Ablaufdiagramm eines Verfahrens 1000 zur Beleuchtungswinkel abhängigen Bildaufnahme eines Merkmals eines Identifikationsdokumentes mit Beleuchtungswinkel abhängigen Darstellungen. Das Verfahren 1000 kann einen Schritt eines Beleuchtens 1001 der Dokumentenauflage (101) aus unterschiedlichen Beleuchtungswinkeln umfassen. Zudem kann das Verfahren 1000 einen Schritt eines Erzeugens 1003 einer Mehrzahl von Beleuchtungswinkel abhängigen Bildaufnahmen des Merkmals umfassen.

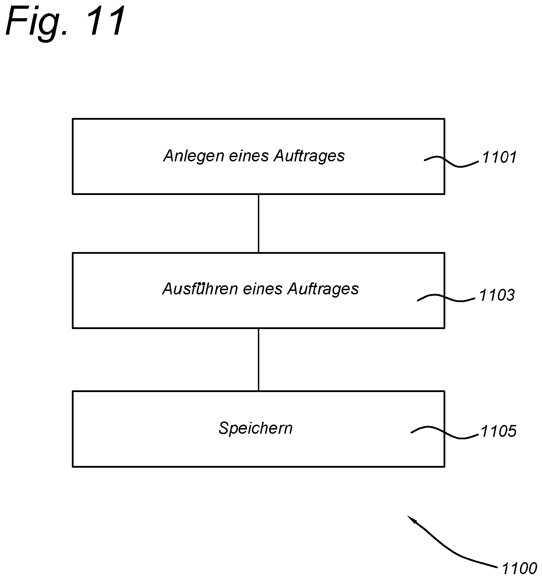

Fig. 11 zeigt ein Ablaufdiagramm eines Verfahrens 1100 zur automatisierten Erfassung von Dokumenten. Das Verfahren 1100 kann einen Schritt eines Anlegens 1101 eines Auftrages, einen Schritt eines Ausführens 1103 eines Auftrages sowie einen Schritt eines Speicherns 1105 umfassen.

Durch das Anlegen 1101 eines Auftrages zur automatisierten Erfassung von Dokumenten können die zu erfassenden Merkmale, beispielsweise eines Identifikationsdokumentes, definiert werden. Das Anlegen 1101 eines Auftrages kann beispielsweise mithilfe eines Rechners sowie eines Auslesegerätes, beispielsweise für Identifikationsdokumente, durchgeführt werden. Das Ausführen 1103 des Auftrages kann beispielsweise mittels des Bildaufnahmesystems 100 durchgeführt werden. Dabei können beispielsweise die zu erfassenden Merkmale, die Bildaufnahmen und/oder die Bildaufnahmeserien aufgenommen werden. Durch das Speichern 1105 können die zu erfassenden Merkmale, die Bildaufnahmen und/oder die Bildaufnahmeserien beispielsweise in einer Datenbank oder einem Server abgelegt werden.

Das Verfahren 1100 kann durch einen Arbeitsauftrag bzw. Kontrakt koordiniert werden. Somit können beispielsweise die Erfassung eines Dokumentes sowie die Ablage, beispielsweise der zu erfassenden Merkmale, der Bildaufnahmen und/oder der Bildaufnahmeserien, in die Datenbank gesteuert werden. Dieser Vorgang kann bei maschinell lesbaren Dokumenten beispielsweise teilautomatisiert erfolgen. Zudem können beispielsweise bestehende Arbeitsaufträge als Vorlage bzw. Template genutzt werden. Darüber hinaus können beispielsweise eine standardisierte Bildaufnahmekamera bzw. Kamera sowie Beleuchtungsprofile zur Datenerfassung genutzt werden.

### Bezugszeichenliste

- 100: Bildaufnahmesystem
- 101: Dokumentenauflage
- 103: Bildaufnahmekamera
- 105: Zweite Bildaufnahmekamera
- 107: Optisches Element
- 109: Erste Lichtelementanordnung
- 111: Zweite Lichtelementanordnung
- 113: Dritte Lichtelementanordnung
- 115: Vierte Lichtelementanordnung
- 117: Fünfte Lichtelementanordnung
- 119: Sechste Lichtelementanordnung
- 121: Siebente Lichtelementanordnung
- 123: Achte Lichtelementanordnung
- 125: Beleuchtungseinrichtung

- 701: Mikroschalter

- 1000: Verfahren zur Beleuchtungswinkel abhängigen Bildaufnahme eines Merkmals eines Identifikationsdokumentes mit Beleuchtungswinkel abhängigen Darstellungen
- 1001: Beleuchten der Dokumentenauflage aus unterschiedlichen Beleuchtungswinkeln
- 1003: Erzeugen einer Mehrzahl von Beleuchtungswinkel abhängigen Bildaufnahmen des Merkmals

- 1100: Verfahren zur automatisierten Erfassung von Dokumenten
- 1101: Anlegen eines Auftrages
- 1103: Ausführen eines Auftrages
- 1105: Speichern

## Patentansprüche

1. Bildaufnahmesystem (100) zur Bildaufnahme eines Merkmals eines Identifikationsdokumentes mit Beleuchtungswinkel abhängigen Darstellungen, mit:
einer Dokumentenauflage (101) für das Identifikationsdokument;
einer Beleuchtungseinrichtung (125) zum Beleuchten der Dokumentenauflage (101) aus unterschiedlichen Beleuchtungswinkeln; und
einer Bildaufnahmekamera (103) für die Beleuchtungswinkel abhängige Bildaufnahme des Merkmals,
wobei die Beleuchtungseinrichtung (125) eine Mehrzahl von Lichtelementanordnungen (109, 111, 113, 115, 117, 119, 121, 123) mit jeweils zumindest einem Lichtelement aufweist, wobei die Lichtelementanordnungen (109, 111, 113, 115, 117, 119, 121, 123) ausgebildet sind, Licht aus unterschiedlichen Beleuchtungswinkeln, insbesondere jeweils aus einem Beleuchtungswinkel von 10°, 30°, 50° oder 70°, in Richtung der Dokumentenauflage (101) auszusenden,
wobei die Beleuchtungseinrichtung (125) eine Lichtelementanordnung (109, 111, 113, 115, 117, 119, 121, 123) mit zumindest einem Lichtelement aufweist, wobei die Lichtelementanordnung (109, 111, 113, 115, 117, 119, 121, 123) schwenkbar angeordnet ist, um Licht aus unterschiedlichen Beleuchtungswinkeln in Richtung der Dokumentenauflage (101) auszusenden,
wobei die eine Lichtelementanordnung (109, 111, 113, 115, 117, 119, 121, 123) mittels eines Stellgliedes schwenkbar gelagert ist, um Licht aus unterschiedlichen Beleuchtungswinkeln, insbesondere jeweils aus einem Beleuchtungswinkel von 10°, 30°, 50° oder 70°, in Richtung der Dokumentenauflage (101) auszusenden,
wobei die jeweiligen Lichtelemente Gruppen von LEDs oder Lampen umfassen, welche jeweils in derselben Ebene in einer Leiste angeordnet sind, wobei die Oberflächennormalen der Leisten unter unterschiedlichen Beleuchtungswinkeln in Richtung Dokumentenauflage (101) weisen.

2. Bildaufnahmesystem (100) nach Anspruch 1, wobei die Beleuchtungseinrichtung (125) ausgebildet ist, die Dokumentenauflage (101) aus unterschiedlichen Beleuchtungswinkeln sequenziell zu beleuchten.

3. Bildaufnahmesystem (100) nach einem der vorstehenden Ansprüche, wobei die Lichtelementanordnung (109, 111, 113, 115, 117, 119, 121, 123) zum Erzeugen von Licht in einem ersten Wellenlängenbereich ausgebildet ist, und wobei die Beleuchtungseinrichtung (125) eine zweite Lichtelementanordnung (109, 111, 113, 115, 117, 119, 121, 123) zum Erzeugen von Licht in einem zweiten Wellenlängenbereich umfasst.

4. Bildaufnahmesystem (100) nach Anspruch 3, wobei der erste Wellenlängenbereich und der zweite Wellenlängenbereich zumindest teilweise unterschiedlich sind und aus den folgenden Wellenlängenbereichen ausgewählt sind: Infrarot-Wellenlängenbereich, Ultraviolett-Wellenlängenbereich, Weißlicht-Wellenlängenbereich, Halogen-Wellenlängenbereich.

5. Bildaufnahmesystem (100) nach einem der vorstehenden Ansprüche, welche ferner eine zweite Bildaufnahmekamera (105) umfasst.

6. Bildaufnahmesystem (100) nach Anspruch 5, wobei die Bildaufnahmekamera (103) und die zweite Bildaufnahmekamera (105) für Bildaufnahmen bei unterschiedlichen Beleuchtungswinkeln oder in unterschiedlichen Wellenlängenbereichen vorgesehen sind.

7. Bildaufnahmesystem (100) nach Anspruch 5 oder 6, wobei die Bildaufnahmekamera (103) und die zweite Bildaufnahmekamera (105) winklig zueinander, insbesondere unter einem Winkel von 90° innerhalb eines Winkeltoleranzbereichs, ausgerichtet sind.

8. Bildaufnahmesystem (100) nach einem der vorstehenden Ansprüche 5 bis 7, wobei unterhalb der Dokumentenauflage (101) ein optisches Element (107) angeordnet ist, welches vorgesehen ist, einen ersten Anteil des einfallenden Lichts zu der Bildaufnahmekamera (103) zu richten, und einen zweiten Anteil des einfallenden Lichts zu der zweiten Bildaufnahmekamera (105) zu richten.

9. Bildaufnahmesystem (100) nach einem der vorstehenden Ansprüche, das ausgebildet ist, eine Mehrzahl von Bildaufnahmen bei unterschiedlichen Beleuchtungswinkeln oder in unterschiedlichen Wellenlängenbereichen automatisch in einem Arbeitsgang zu erzeugen.

10. Bildaufnahmesystem (100) nach einem der vorstehenden Ansprüche, das ein Referenzbildaufnahmesystem für die Referenzbildaufnahme von Referenzmerkmalen ist.

11. Bildaufnahmesystem (100) nach einem der vorstehenden Ansprüche, wobei die Dokumentenauflage (101) lichttransparent und für die Aufnahme des Identifikationsdokumentes vorgesehen ist, und wobei die Bildaufnahmekamera (103) ausgebildet ist, das von dem Identifikationsdokument ansprechend auf eine Beleuchtung bei unterschiedlichen Beleuchtungswinkeln stammende Licht in einer Bildaufnahmeserie aufzunehmen.

12. Bildaufnahmesystem (100) nach einem der vorstehenden Ansprüche, das ferner einen Prozessor umfasst, welcher ausgebildet ist, die Beleuchtungseinrichtung (125) für die Beleuchtungswinkel abhängige oder für die Wellenlängenbereich abhängige Beleuchtung der Dokumentenauflage (101) zu steuern.

13. Verfahren (1000) zur Beleuchtungswinkel abhängigen Bildaufnahme eines Merkmals eines Identifikationsdokumentes mit Beleuchtungswinkel abhängigen Darstellungen, wobei das Identifikationsdokument auf eine Dokumentenauflage (101) auflegbar ist, mit:
Beleuchten (1001) der Dokumentenauflage (101) aus unterschiedlichen Beleuchtungswinkeln mittels einer Beleuchtungseinrichtung (125); und
Erzeugen (1003) einer Mehrzahl von Beleuchtungswinkel abhängigen Bildaufnahmen des Merkmals,
wobei die Beleuchtungseinrichtung (125) eine Mehrzahl von Lichtelementanordnungen (109, 111, 113, 115, 117, 119, 121, 123) mit jeweils zumindest einem Lichtelement aufweist, wobei die Lichtelementanordnungen (109, 111, 113, 115, 117, 119, 121, 123) ausgebildet sind, Licht aus unterschiedlichen Beleuchtungswinkeln, insbesondere jeweils aus einem Beleuchtungswinkel von 10°, 30°, 50° oder 70°, in Richtung der Dokumentenauflage (101) auszusenden,
wobei die Beleuchtungseinrichtung (125) eine Lichtelementanordnung (109, 111, 113, 115, 117, 119, 121, 123) mit zumindest einem Lichtelement aufweist, wobei die Lichtelementanordnung (109, 111, 113, 115, 117, 119, 121, 123) schwenkbar angeordnet ist, um Licht aus unterschiedlichen Beleuchtungswinkeln in Richtung der Dokumentenauflage (101) auszusenden,
wobei die eine Lichtelementanordnung (109, 111, 113, 115, 117, 119, 121, 123) mittels eines Stellgliedes schwenkbar gelagert ist, um Licht aus unterschiedlichen Beleuchtungswinkeln, insbesondere jeweils aus einem Beleuchtungswinkel von 10°, 30°, 50° oder 70°, in Richtung der Dokumentenauflage (101) auszusenden,
wobei die jeweiligen Lichtelemente Gruppen von LEDs oder Lampen umfassen, welche jeweils in derselben Ebene in einer Leiste angeordnet sind, wobei die Oberflächennormalen der Leisten unter unterschiedlichen Beleuchtungswinkeln in Richtung Dokumentenauflage (101) weisen.

## Claims

1. Image recording system (100) for recording images of a feature of an identification document with illumination angle-dependent representations, the image recording system (100) comprising:
a document support (101) for the identification document;
an illumination device (125) for illuminating the document support (101) from different illumination angles; and
an image recording camera (103) for the illumination angle-dependent image recording of the feature,
wherein the illumination device (125) comprises a plurality of light element arrangements (109, 111, 113, 115, 117, 119, 121, 123), each with at least one light element, wherein the light element arrangements (109, 111, 113, 115, 117, 119, 121, 123) are configured to emit light from different illumination angles, in particular from an illumination angle of 10°, 30°, 50° or 70° respectively, in the direction of the document support (101),
wherein the illumination device (125) comprises a light element arrangement (109, 111, 113, 115, 117, 119, 121, 123) with at least one light element, wherein the light element arrangement (109, 111, 113, 115, 117, 119, 121, 123) is pivotably arranged in order to emit light from different illumination angles in the direction of the document support (101),
wherein the one light element arrangement (109, 111, 113, 115, 117, 119, 121, 123) is pivotally mounted by an actuator in order to send out light from different illumination angles, in particular from an illumination angle of 10°, 30°, 50° or 70° respectively, in the direction of the document support (101),
wherein the respective light elements comprise groups of LEDs or lamps, which are each arranged in the same plane in a bar, wherein the surface normals of the bars point towards the document support (101) at different illumination angles.

2. Image recording system (100) according to claim 1, wherein the illumination device (125) is configured to sequentially illuminate the document support (101) from different illumination angles.

3. Image recording system (100) according to one of the preceding claims, wherein the light element arrangement (109, 111, 113, 115, 117, 119, 121, 123) is configured to generate light in a first wavelength range, and wherein the illumination device (125) comprises a second light element arrangement (109, 111, 113, 115, 117, 119, 121, 123) for generating light in a second wavelength range.

4. Image recording system (100) according to claim 3, wherein the first wavelength range and the second wavelength range are at least partially different and are selected from the following wavelength ranges: infrared wavelength range, ultraviolet wavelength range, white light wavelength range, halogen wavelength range.

5. Image recording system (100) according to one of the preceding claims, which further comprises a second image recording camera (105).

6. Image recording system (100) according to claim 5, wherein the image recording camera (103) and the second image recording camera (105) are provided for image recordings at different illumination angles or in different wavelength ranges.

7. Image recording system (100) according to claim 5 or 6, wherein the image recording camera (103) and the second image recording camera (105) are aligned at an angle to one another, in particular at an angle of 90° within an angular tolerance range.

8. Image recording system (100) according to one of the preceding claims 5 to 7, wherein an optical element (107) is arranged below the document support (101), which is provided to direct a first portion of the incident light to the image recording camera (103) and to direct a second portion of the incident light to the second image recording camera (105).

9. Image recording system (100) according to one of the preceding claims, which is configured to automatically generate a plurality of image recordings at different illumination angles or in different wavelength ranges in one operation.

10. Image recording system (100) according to one of the preceding claims, which is a reference image recording system for the reference image recording of reference features.

11. Image recording system (100) according to one of the preceding claims, wherein the document support (101) is light-transparent and provided for the recording of the identification document, and wherein the image recording camera (103) is configured to record the illumination light originating from the identification document in response to an illumination at different illumination angles in a series of images.

12. Image recording system (100) according to one of the preceding claims, which further comprises a processor, which is configured to control the illumination device (125) for the illumination angle-dependent or for the wavelength range-dependent illumination of the document support (101).

13. Method (1000) for an illumination angle-dependent image recording of a feature of an identification document with illumination angle-dependent representations, wherein the identification document is placeable on a document support (101), the method (1000) comprising:
illuminating (1001) the document support (101) from different illumination angles by an illumination device (125); and
generating (1003) a plurality of illumination angle-dependent image recordings of the feature,
wherein the illumination device (125) comprises a plurality of light element arrangements (109, 111, 113, 115, 117, 119, 121, 123), each with at least one light element, wherein the light element arrangements (109, 111, 113, 115, 117, 119, 121, 123) are configured to emit light from different illumination angles, in particular from an illumination angle of 10°, 30°, 50° or 70° respectively, in the direction of the document support (101),
wherein the illumination device (125) comprises a light element arrangement (109, 111, 113, 115, 117, 119, 121, 123) with at least one light element, wherein the light element arrangement (109, 111, 113, 115, 117, 119, 121, 123) is pivotably arranged in order to emit light from different illumination angles in the direction of the document support (101),
wherein the one light element arrangement (109, 111, 113, 115, 117, 119, 121, 123) is pivotally mounted by an actuator in order to send out light from different illumination angles, in particular from an illumination angle of 10°, 30°, 50° or 70° respectively, in the direction of the document support (101),
wherein the respective light elements comprise groups of LEDs or lamps, which are each arranged in the same plane in a bar, wherein the surface normals of the bars point towards the document support (101) at different illumination angles.

## Revendications

1. Système d'enregistrement d'images (100) pour enregistrer des images d'un élément d'un document d'identification avec des représentations dépendant de l'angle d'éclairage, le système d'enregistrement d'images (100) comprenant :
un support de document (101) pour le document d'identification ;
un dispositif d'éclairage (125) pour éclairer le support de document (101) sous différents angles d'éclairage ; et
une caméra d'enregistrement d'image (103) pour l'image dépendant de l'angle d'éclairage enregistrant la caractéristique,
dans lequel le dispositif d'éclairage (125) comprend une pluralité d'agencements d'éléments lumineux (109, 111, 113, 115, 117, 119, 121, 123), chacun comportant au moins un élément lumineux, dans lequel les agencements d'éléments lumineux (109, 111, 113, 115, 117, 119, 121, 123) sont adaptés pour émettre de la lumière sous différents angles d'éclairage, notamment sous un angle d'éclairage de 10°, 30°, 50° ou 70° respectivement, en direction du support de document (101),
dans lequel le dispositif d'éclairage (125) comprend un agencement d'éléments lumineux (109, 111, 113, 115, 117, 119, 121, 123) avec au moins un élément lumineux, dans lequel l'agencement d'éléments lumineux (109, 111, 113, 115, 117, 119, 121, 123) est agencé de manière pivotante pour émettre de la lumière sous différents angles d'éclairage en direction du support de document (101),
dans lequel l'ensemble d'éléments lumineux (109, 111, 113, 115, 117, 119, 121, 123) est monté pivotant par un actionneur pour émettre de la lumière sous différents angles d'éclairage, en particulier sous un angle d'éclairage de 10°, respectivement 30°, 50° ou 70°, en direction du support de document (101),
les éléments lumineux respectifs comprenant des groupes de LED ou de lampes, qui sont chacune disposées dans le même plan dans une barre, les normales de surface des barres pointant vers le support de document (101) sous différents angles d'éclairage.

2. Système d'enregistrement d'images (100) selon la revendication 1, dans lequel le dispositif d'éclairage (125) est adapté pour éclairer séquentiellement le support de document (101) sous différents angles d'éclairage.

3. Système d'enregistrement d'images (100) selon l'une des revendications précédentes, dans lequel l'agencement d'éléments lumineux (109, 111, 113, 115, 117, 119, 121, 123) est adapté pour générer de la lumière dans une première plage de longueurs d'onde, et dans lequel le dispositif d'éclairage (125) comprend un deuxième agencement d'éléments lumineux (109, 111, 113, 115, 117, 119, 121, 123) pour générer de la lumière dans une deuxième plage de longueurs d'onde.

4. Système d'enregistrement d'images (100) selon la revendication 3, dans lequel la première plage de longueurs d'onde et la deuxième plage de longueurs d'onde sont au moins partiellement différentes et sont choisies parmi les plages de longueurs d'onde suivantes : plage de longueurs d'onde infrarouge, plage de longueurs d'onde ultraviolette, plage de longueurs d'onde de lumière blanche, Plage de longueurs d'onde halogène.

5. Système d'enregistrement d'images (100) selon l'une des revendications précédentes, qui comprend en outre une deuxième caméra d'enregistrement d'images (105).

6. Système d'enregistrement d'images (100) selon la revendication 5, dans lequel la caméra d'enregistrement d'images (103) et la seconde caméra d'enregistrement d'images (105) sont prévues pour des enregistrements d'images sous différents angles d'éclairage ou dans différentes plages de longueurs d'onde.

7. Système d'enregistrement d'images (100) selon la revendication 5 ou 6, dans lequel la caméra d'enregistrement d'images (103) et la deuxième caméra d'enregistrement d'images (105) sont alignées selon un angle l'une par rapport à l'autre, en particulier selon un angle de 90° à l'intérieur une plage de tolérance angulaire.

8. Système d'enregistrement d'images (100) selon l'une des revendications précédentes 5 à 7, dans lequel un élément optique (107) est disposé en dessous du support de document (101), qui est prévu pour diriger une première partie de la lumière incidente vers le caméra d'enregistrement d'images (103) et pour diriger une seconde partie de la lumière incidente vers la seconde caméra d'enregistrement d'images (105).

9. Système d'enregistrement d'images (100) selon l'une des revendications précédentes, qui est adapté pour générer automatiquement une pluralité d'enregistrements d'images sous différents angles d'éclairage ou dans différentes plages de longueurs d'onde en une seule opération.

10. Système d'enregistrement d'images (100) selon l'une des revendications précédentes, qui est un système d'enregistrement d'images de référence pour l'enregistrement d'images de référence d'éléments de référence.

11. Système d'enregistrement d'images (100) selon l'une des revendications précédentes, dans lequel le support de document (101) est transparent à la lumière et prévu pour l'enregistrement du document d'identification, et dans lequel la caméra d'enregistrement d'images (103) est adaptée pour enregistrer la lumière d'éclairage provenant du document d'identification en réponse à un éclairage sous différents angles d'éclairage dans une série d'images.

12. Système d'enregistrement d'images (100) selon l'une des revendications précédentes, qui comprend en outre un processeur, qui est adapté pour commander le dispositif d'éclairage (125) pour l'éclairage dépendant de l'angle d'éclairage ou pour l'éclairage dépendant de la plage de longueurs d'onde du document support (101).

13. Procédé (1000) pour un enregistrement d'image dépendant de l'angle d'éclairage d'une caractéristique d'un document d'identification avec des représentations dépendant de l'angle d'éclairage, dans lequel le document d'identification peut être placé sur un support de document (101), le procédé (1000) comprenant :
éclairer (1001) le support de document (101) sous différents angles d'éclairage par un dispositif d'éclairage (125) ; et
générer (1003) une pluralité d'enregistrements d'images dépendants de l'angle d'éclairage de l'élément,
dans lequel le dispositif d'éclairage (125) comprend une pluralité d'agencements d'éléments lumineux (109, 111, 113, 115, 117, 119, 121, 123), chacun comportant au moins un élément lumineux, dans lequel les agencements d'éléments lumineux (109, 111, 113, 115, 117, 119, 121, 123) sont adaptés pour émettre de la lumière sous différents angles d'éclairage, notamment sous un angle d'éclairage de 10°, 30°, 50° ou 70° respectivement, en direction du support de document (101),
dans lequel le dispositif d'éclairage (125) comprend un agencement d'éléments lumineux (109, 111, 113, 115, 117, 119, 121, 123) avec au moins un élément lumineux, dans lequel l'agencement d'éléments lumineux (109, 111, 113, 115, 117, 119, 121, 123) est agencé de manière pivotante pour émettre de la lumière sous différents angles d'éclairage en direction du support de document (101),
dans lequel l'ensemble d'éléments lumineux (109, 111, 113, 115, 117, 119, 121, 123) est monté pivotant par un actionneur pour émettre de la lumière sous différents angles d'éclairage, en particulier sous un angle d'éclairage de 10°, respectivement 30°, 50° ou 70°, en direction du support de document (101),
les éléments lumineux respectifs comprenant des groupes de LED ou de lampes, qui sont chacune disposées dans le même plan dans une barre, les normales de surface des barres pointant vers le support de document (101) sous différents angles d'éclairage.
